# EUROPEAN PATENT SPECIFICATION

(11) **EP 4 033 903 B1**
(45) Date of publication and mention of the grant of the patent: **29.03.2023**
(21) Application number: 21730212.4
(22) Date of filing: 04.06.2021
(51) Int. Cl.: A01N 37/44, C05G 1/00, C05F 1/00, A01P 15/00

(54) **METHOD FOR GROWING PLANTS**
PFLANZENZUCHTVERFAHREN
PROCÉDÉ DE CULTURE DE PLANTES

(30) Priority: 05.06.2020 EP 20178517
(43) Date of publication of application: 03.08.2022
(73) Proprietor: Taminco BV, 9000 Gent (BE)
(72) Inventor: RABASSE, Jean-Michel, 75017 Paris (FR); VERGOTE, Nico, 9772 Kruisem (BE); KYNDT, Tina, 9000 Gent (BE); SINGH, Richard, Raj, 13094 Suva (FJ)
(74) Representative: Gevers Patents
(86) International application number: PCT/EP2021/064976
(87) International publication number: WO 2021/245217

(56) References cited:
- WO-A1-98/46078
- WO-A1-98/56234
- WO-A2-2005/028419
- YIGAL R COHEN: "[beta]-Aminobutyric Acid-Induced Resistance Against Plant Pathogens", PLANT DISEASE, vol. 86, no. 5, 1 May 2002 (2002-05-01), pages 448-457, XP055741549, US ISSN: 0191-2917, DOI: 10.1094/PDIS.2002
- NONOMURA A M ET AL: "The path of carbon in photosynthesis: improved crop yields with methanol.", PROCEEDINGS OF THE NATIONAL ACADEMY OF SCIENCES, vol. 89, 15 October 1992 (1992-10-15), pages 9794-9798, XP055834616, DOI: 10.1073/pnas.89.20.9794 Retrieved from the Internet: URL:https://www.pnas.org/content/pnas/89/2 0/9794.full.pdf>

## Description

### FIELD OF THE INVENTION

The present invention relates to a method for growing plants, wherein said method comprises supplying to at least part of a plant or a seed at least one beta-amino carbonyl compound.

### BACKGROUND OF THE INVENTION

Raising agricultural yields on existing farmlands has become essential for both feeding the continuously growing world population and for protecting natural habitats. In this perspective, controlling crop diseases, pests and weeds, has proven to be an important lever for action. For this purpose, the industry mainly relies on the use of synthetic pesticides as plant protection products (PPP). However, the use of such products is under debate, as their environmental impact is being questioned. Reported adverse effects of conventional pesticides in agriculture impact human and animal health, the environment, beneficial organisms, pollinators, decomposers and natural enemies. Accordingly, the development of sustainable PPP to manage pests and weeds has become essential.

One promising technology to protect plants against pests and weeds in a sustainable way is the use of plant defence inducers (PDI). Commercial PDI such as acibenzolar are commercially available to growers, while others are actively studied by the research community. These include beta-aminobutyric acid (BABA), jasmonic acid (JA) and salicylic acid (SA), such as described in WO 1998/56234 for inducing plant resistance to nematodes and in WO 1998/46078 for controlling fungi in plants.

For example, Y. R. Cohen in Plant Disease, 2002, 86 (5), 448-457 discloses that BABA induces resistance in plants against plant pathogens, and WO9856234 A1 teaches the use of BABA derivatives to prevent plant disease caused by nematodes.

The main drawback hindering the commercial development of these compounds is their negative impact on the growth and development of plants, likely due to the fitness cost incurred by resistance induction. For BABA, this effect was demonstrated by Silué D. and coworkers (Induction of resistance to downy mildew (Peronospora parasitica) in cauliflower by DL-beta-amino-n-butanoic acid (BABA); Plant Pathology (2002), 51, pages 97 - 102), who reported a 14.7% reduction in growth of cauliflower seedlings treaded with 20 mM BABA, whereas higher concentrations caused even stronger phytotoxic effects in most seedlings.

Until now, most efforts to cope with these drawbacks and allow safe use of PDI at a commercial scale have focussed on reducing the rates of application of these products, limiting the field uses, combining PDI with conventional pesticides or screening for synergistic effects with safening compounds.

Luna E. et al. (Optimizing chemically induced resistance in tomato against Botrytis cinerea. Plant Disease (2016), 100, pages 704 - 710) describe the effect of PDI on growth repression on Tomato plants at different rates. The authors describe the use of relatively low concentrations of PDI as means to reduce the negative impact on plant growth. However, root growth repression was observed when treating seedlings with as low as 0.5 mM BABA and 0.25 mM JA.

Recently, screening for chemical analogues of known PDI was found to be a credible alternative for lessening the negative impact of these compounds. Buswell W. et al. (Chemical priming of immunity without costs to plant growth. New Phytologist (2018), 218, pages 1205 - 1216) reports a chemical approach to identify resistance-inducing analogues of BABA which do not negatively affect plant growth. The authors describe that BABA perception relies on binding to the aspartyl-tRNA synthetase (AspRS) IB11, which primes the enzyme for secondary defense activity. Based on ligandinteraction models of the conserved (L)-Asp-binding domain of IB11, a library of structural BABA analogues was screened in order to identify compounds which induce resistance against pests without affecting plant growth. In particular, (*R*)-beta-homoserine showed strong resistance-inducing activity without affecting plant growth or development.

In view of the above, there is thus a continuous need for methods for cultivating plants in particular for the purpose of protecting the plants by inducing resistance against pests without negatively affecting their growth and development.

### SUMMARY OF THE INVENTION

The inventors have now surprisingly found that it is possible to provide an improved method fulfilling the above-mentioned needs.

Thus, there is now provided a method for growing plants, as defined in claim 1.

The present invention further provides the use of a compound of Formula (I_{A1}-a), as defined in claim 16, for growing plants.

### DETAILED DESCRIPTION OF THE INVENTION

Within the context of the present invention, the term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that by supplying at least one compound of Formula (I_{A1}-a) or a salt thereof [compound (A), herein after], as described above, plants could be protected by inducing resistance against pests without negatively affecting their growth and development.

It is understood that, within the context of the method according to the present invention, the compound (A) is supplied to at least part of a plant or a seed which grows or will be grown. As a general rule, such growth occurs on a substrate, such as soil (for example in a pot, in borders or in the field) or artificial media. The terms "grows", "grown" and "growing" as used herein include all physiological processes leading to an increase in cell size and/or cell number as well as those leading to cellular differentiation.

Within the context of the present invention, the expression "at least one compound of Formula (I_{A1}-a) or a salt thereof [compound (A), herein after]" is intended to denote one or more than one compound (A). Mixtures of compounds (A) of Formula (I_{A1}-a) can also be used for the purpose of the invention.

In the rest of the text, the expression "at least one compound (A)" is understood, for the purposes of the present invention, both in the plural and the singular, that is to say the method for growing plants of the present invention may comprise supplying one or more than one compound (A).

As used herein the term "alkyl" has the broadest meaning generally understood in the art, and may include a moiety which is linear or branched, or a combination thereof.

The term "alkyl" - alone or in combination means a straight or branched alkane-derived radical, for example, C_{F-G} alkyl defines a straight or branched alkyl radical having from F to G carbon atoms, e.g. C₁₋₄ alkyl defines a straight or branched alkyl radical having from 1 to 4 carbon atoms such as for example methyl, ethyl, 1-propyl, 2-propyl (isopropyl), 1-butyl, 2-butyl, 2-methyl-2-propyl (*tert*-butyl), 2-methyl-1-propyl (isobutyl).

According to the method of the present invention, the compound (A) is according to general Formula (I_{A1}-a) herein below: 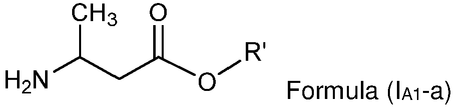 wherein
R' is independently selected from C₁₋₄ alkyl. Desirably, R' is independently selected from methyl, ethyl, propyl, isopropyl, more desirably, R' is methyl. Compounds of Formula (I_{A1}-a) are known, for example, from WO2005028419 A2.

The compound (A) of Formula (I_{A1}-a) as specified herein, has one center of chirality and may exist as stereochemically isomeric forms. The term "stereochemically isomeric forms" as used herein defines all the possible compounds made up of the same atoms bonded by the same sequence of bonds but having different three-dimensional structures.

Unless otherwise mentioned or indicated, the chemical designation of the compound (A) of Formula (I_{A1}-a) as specified herein, encompasses the mixture of all possible stereochemically isomeric forms, which said compound may possess. Said mixture may contain all diastereomers and/or enantiomers of the basic molecular structure of said compound. All stereochemically isomeric forms of the compounds of the present invention both in pure form or mixed with each other are intended to be embraced within the scope of the present invention.

Pure stereoisomeric forms of the compound (A) of Formula (I_{A1}-a) as specified herein, and intermediates as mentioned herein are defined as isomers substantially free of other enantiomeric or diastereomeric forms of the same basic molecular structure of said compounds or intermediates. In particular, the term "stereoisomerically pure" concerns compounds or intermediates having a stereoisomeric excess of at least 80% (i.e. minimum 90% of one isomer and maximum 10% of the other possible isomers) up to a stereoisomeric excess of 100% (i.e. 100% of one isomer and none of the other), more in particular, compounds or intermediates having a stereoisomeric excess of 90% up to 100%, even more in particular having a stereoisomeric excess of 94% up to 100% and most in particular having a stereoisomeric excess of 97% up to 100%. The terms "enantiomerically pure" and "diastereomerically pure" should be understood in a similar way, but then having regard to the enantiomeric excess, and the diastereomeric excess, respectively, of the mixture in question.

Pure stereoisomeric forms of the compounds and intermediates of this invention may be obtained by the application procedures known in the art. For instance, enantiomers may be separated from each other by the selective crystallization of their diastereomeric salts with optically active acids or bases. Examples thereof are tartaric acid, dibenzoyltartaric acid, ditoluoyltartaric acid and camphorsulfonic acid. Alternatively, enantiomers may be separated by chromatographic techniques using chiral stationary phases. Said pure stereochemically isomeric forms may also be derived from the corresponding pure stereochemically isomeric forms of the appropriate starting materials, provided that the reaction occurs stereospecifically. Desirably, if a specific stereoisomer is desired, said compound will be synthesized by stereospecific methods of preparation. These methods will advantageously employ enantiomerically pure starting materials.

More preferred compounds (A) according to general Formula (I_{A1}-a), for use in the method according to the present invention, are those of Formula (I_{A1-1}-a) 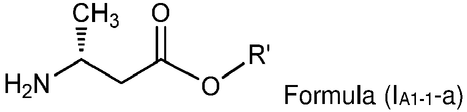 wherein R' has the same meaning as defined above for Formula (I_{A1}-a).

Most preferred compound (A) according to general Formula (I_{A1}-a), for use in the method according to the present invention, is the one of Formula (I_{A1-1}-a1) herein below:

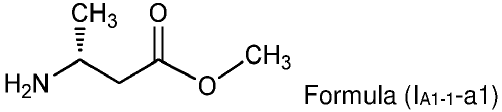

It is further understood that all definitions and preferences as described for the compound (A) above equally apply for all further embodiments, as described below.

The compound (A) can be prepared by any method known in the art for the manufacture of beta-amino carbonyl compounds.

In general, the carboxylic acid precursor of the compound (A) can be esterified by methods known in the art. Non-limiting examples of such methods well-known in the art are Fisher-Speier esterifications, Steglich esterifications, alkylation of carboxylate salts, from alcohols and acid chlorides, from alcohols and acid anhydrides, and for example those notably described in ChemBiochem 2018, 19, 696 - 705 by Van der Poorten et al., Bull. Chem. Soc. Ethiop. 2012, 26, 415 - 420 by Tang et al., Synthetic Commun. 2001, 31, 2169 - 2175 by Rivero et al., Synthetic Commun. 1998, 28, 1963 - 1965 by Anand et al., Molecules 2008, 13, 1111 - 1119 by Li et al., and the like.

Non-limitative examples of processes for producing beta-amino carbonyl compounds are taught in Tetrahedron 1995, 51, 12337 - 12350 by Caputo et al., in Org. Synth. 2002, 79, 154 by Linder et al., and in Synth. Comm. 2005, 35, 2789 - 2794 by Koch et al.

As discussed above, it was already described in the prior art that the supplying beta-aminobutyric acid (BABA) to plants or seeds resulted in protection against pests. However, it was further demonstrated that such protection resulted in an negative impact on the growth and development of said plants.

The inventors have now surprisingly found that by supplying the at least one compound (A) of general Formula (I_{A1}-a) to at least part of a plant or a seed, as described above, plants could be protected by inducing resistance against pests without negatively affecting their growth and development, as evidenced by the examples below. Moreover, small amounts of the compound (A) comprised between 1.0 × 10⁻³ and 100.0 µmole/gram of fresh weight of plant or seed, can already be supplied in order to achieve a beneficial effect on their resistance against pests, thereby resulting in a smaller cost for the supply of this plant protection product to the plant or seed.

Within the context of the invention, the term "pest" broadly refers to any harmful organism or disease, such as but not limited to, insects, mites, arachnids, nematodes, molluscs, rodents, bacteria, phytoplasmas, viruses, viroids, molds, fungi, and spores.

As non-limiting examples of plants which can be protected by inducing resistance against pests without negatively affecting their growth and development according to the present invention, mention can be made of cereals (such as durum and other wheat, rye, barley, triticale, oats, rice, or maize (fodder maize and sugar maize/sweet and field corn)), beet (such as sugar beet or fodder beet), fruits (such as pomes, stone fruits or soft fruits, e.g. apples, pears, plums, peaches, nectarines, almonds, cherries, papayas, strawberries, raspberries, blackberries or gooseberries), leguminous plants (such as beans, lentils, peas, alfalfa or soybeans), oil plants (such as rapeseed (oilseed rape), turnip rape, mustard, olives, sunflowers, coconut, cocoa beans, castor oil plants, oil palms, ground nuts or soybeans), cucurbits (such as squashes, pumpkins, cucumber or melons), fiber plants (such as cotton, flax, hemp or jute), citrus fruit (such as oranges, lemons, grapefruits or mandarins), vegetables (such as eggplant, spinach, lettuce, chicory, cabbage, asparagus, cabbages, carrots, onions, garlic, leeks, tomatoes, potatoes, cucurbits or sweet peppers), herbs (such as parsley, mint, basil, sage, rosemary, thyme, rosemary or sage), lauraceous plants (such as avocados, cinnamon or camphor), energy and raw material plants (such as corn, soybean, rapeseed, sugar cane or oil palm; tobacco), nuts (such as walnuts), pistachios, coffee, tea, bananas, vines ( such as table grapes and grape juice grape vines), hop, sweet leaf (also called Stevia), natural rubber plants or ornamental and forestry plants (such as flowers (e.g. carnation, petunias, geranium/pelargoniums, pansies and impatiens), shrubs, broad-leaved trees (such as poplar) or evergreens (such as conifers)), eucalyptus, turf, lawn, grass such as grass for animal feed or ornamental uses.

In a preferred embodiment, plants which can be protected by inducing resistance against pests without negatively affecting their growth and development according to the present invention are selected from potatoes, sugar beets, tobacco, wheat, rye, barley, oats, rice, corn, cotton, soybeans, rapeseed, legumes, sunflowers, coffee or sugar cane, fruits, herbs, vines, ornamentals, or vegetables, such as cucumbers, tomatoes, beans or squashes. Desirably, plants which can be protected by inducing resistance against pests without negatively affecting their growth and development according to the present invention are selected from strawberry, tomato, potato, lettuce, grapes, soybean and cucurbits.

Within the context of the present invention, the term "plant" is to be understood as including wild type plants and plants which have been modified by either conventional breeding, or mutagenesis or genetic engineering, or by a combination thereof.

In the rest of the text, the terms "plant" and "seed" are understood, for the purposes of the present invention, both in the plural and the singular form.

Within the context of the present invention, the expression "fresh weight of plant or seed" is intended to denote the weight recorded immediately after harvest of said plant or seed.

It is understood that, within the context of the method according to the present invention, the expression "at least one plant part" also includes the whole plant.

It is also understood that, within the context of the present invention, the term "seed" embraces seeds and plant propagules of all kinds. Non-limiting examples include but are not limited to true seeds, seed pieces, suckers, corms, bulbs, fruit, tubers, grains, cuttings, cut shoots and the like.

It is further understood that the at "least part of a plant or a seed" to which compound (A) is supplied refers to at least plant parts or seeds of the plants which are to be protected by inducing resistance against pests without negatively affecting their growth and development according to the present invention.

According to certain embodiments of the method according to the present invention, the compound (A), as described above, is supplied directly to the at least one plant part or seed, meaning that the compound (A) is applied directly to a seed, a whole plant or a plant part, typically the foliage, stem or roots.

According to further embodiments of the method according to the present invention, the compound (A), as described above is supplied indirectly to the at least one plant part or seed, meaning that the compound (A) is applied to the locus in which the at least one plant or seed is growing or may grow. Non-limiting examples of such locus include the habitats, soils, areas, materials or environments in which plants or seeds are able to grow.

It is understood that the amount of compound (A) which is supplied to the at least one plant part or seed will depend on the development stage of the plant or seed to which it is supplied.

As a general rule, the compound (A), as detailed above, is supplied to a seed in an amount of at least 1.0 × 10⁻³ µmol/ gram, or at least 5.0 × 10⁻³ µmol/ gram or at least 1.0 × 10⁻² pmole/gram, or at least 5.0 × 10⁻² µmole/gram, desirably at least 1.0 × 10⁻¹ µmole/gram of fresh weight of said seed.

It is further understood that the upper limit of the supplied amount of the compound (A), as detailed above, is not critical. Desirably, the compound (A) is supplied to the at least one seed in an amount of less than 20 µmole/gram, or less than 10 µmole/gram, or less than 5 µmole/gram, more desirably less than 2 µmole/gram of fresh weight of seed.

In a preferred embodiment of the method of the present invention, the amount of compound (A) supplied to the at least one seed, relative to the fresh weight of said seed, ranges from 1.0 × 10⁻³ µmol/gram to 20 µmol/gram, or from 5.0 × 10⁻³ µmol/gram to 10 µmol/gram, or from 1.0 × 10⁻² µmol/gram to 5 µmol/gram, or from 1.0 × 10⁻¹ µmol/gram to 2 µmol/gram.

As a general rule, the compound (A), as detailed above, is supplied to a plant or plant part in an amount of at least 5.0 × 10⁻³ µmol/ gram, or at least 1.0 × 10⁻² µmol/ gram or at least 5.0 × 10⁻² µmole/gram, or at least 1.0 × 10⁻¹ µmole/gram, desirably at least 1.0 µmole/gram of fresh weight of said plant or plant part.

It is further understood that the upper limit of the supplied amount of the compound (A), as detailed above, is not critical. Desirably, the compound (A) is supplied to the at least one plant or plant part in an amount of less than 100 µmole/gram, or less than 50 µmole/gram, or less than 20 µmole/gram, more desirably less than 10 µmole/gram of fresh weight of plant or plant part.

In a preferred embodiment of the method of the present invention, the amount of compound (A) supplied to the at least one plant or plant part, relative to the fresh weight of said seed, ranges from 5.0 × 10⁻³ µmol/gram to 100 µmol/gram, or from 1.0 × 10⁻² µmol/gram to 50 µmol/gram, or from 5.0 × 10⁻² µmol/gram to 20 µmol/gram, or from 1.0 µmol/gram to 10 µmol/gram.

The compound (A), as detailed above, can either be supplied in a solid form or in liquid form.

In one embodiment of the present invention, the compound (A) is supplied in a solid form. Non-limiting examples of suitable solid forms notably include: powders, dusts, tablets, pellets, or granular forms such as granules, microcrumbs, and regular crumbs or mixtures thereof. Desired solid forms include granular forms.

The term "granules", as used herein, is intended to refer to particles of any shape and any density with a size of at least 2.5 mm, or at least 2.9 mm, or at least 3.2 mm, desirably of at least 3.5 mm.

It is further understood that the upper limit of the size of the granules is not restricted but advantageously equal to or less than 9.0 mm, or equal to or less than 8.0 mm, or equal to or less than 7.5 mm, desirably equal to or less than 7.0 mm.

Advantageously, the size of the granules ranges from 2.5 mm to 9.0 mm, or from 2.9 mm to 8.0 mm, or from 3.2 mm to 7.5 mm, or from 3.5 mm to 7.0 mm.

The term "microcrumbs", as used herein, is intended to refer to particles of any shape and any density with a size of at least 0.1 mm, or at least 0.3 mm, or at least 0.5 mm, desirably at least 0.7 mm.

It is further understood that the upper limit for the size of the microcrumbs advantageously equal to or less than 3.0 mm, or equal to or less than 2.7 mm, or equal to or less than 2.5 mm, or equal to or less than 2.3 mm, desirably equal to or less than 2.1 mm.

Advantageously, the size of the microcrumbs ranges from 0.1 mm to 3.0 mm, or from 0.3 mm to 2.7 mm, or from 0.5 mm to 2.5 mm, or from 0.7 mm to 2.1 mm.

The term " regular crumbs", as used herein, is intended to refer to particles of any shape and any density with a size of at least 1.0 mm, or at least 1.5 mm, or at least 1.9 mm, desirably, at least 2.1 mm.

It is further understood that the upper limit if the size of the regular crumbs is advantageously equal to or less than 5.0 mm, or equal to or less than 4.5 mm, or equal to or less than 4.1 mm, or equal to or less than 3.8 mm, desirably equal to or less than 3.5 mm.

Advantageously, the size of the regular crumbs ranges from 1.0 mm to 5.0 mm, or from 1.5 mm to 4.5 mm, or from 1.9 mm to 4.1 mm, or from 2.1 mm to 3.8 mm.

Generally, particle size such as the size of granules, microcrumbs and regular crumbs as defined above, may be measured by known methods in the art, in particular by sieving with screens as notably described in ISO 8397:1988, the whole content of which is herein incorporated by reference.

It is understood that the particle size expressed in mm refers to the median (or geometric mean) of the particles sizes corresponding to P(X<x) = 50 wt. %, wherein X is the particles size expressed in mm, P us the percentage by weight of particles smaller than the sieve screen size x expressed in mm, relative to the total weight of the sieved sample.

According to a preferred embodiment of the method according to the present invention, the compound (A) is supplied in a liquid form. Non-limiting examples of suitable liquid forms notably include: solutions, dispersions such as emulsions and suspensions and foams.

Desirably, when the compound (A) according to the present invention is supplied in a liquid form, it is comprised in a concentrated composition [concentrated composition (Cc), herein after].

According to a particular embodiment of the method according to the present invention, the amount of the at least one compound (A), as detailed above, is equal to or at least 1.0 × 10¹ millimoles per litre of the concentrated composition (Cc) [mM, herein after], or equal to or at least 5.0 × 10¹ mM, or equal to or at least 1.0 × 10² mM, or equal to or at least 5.0 × 10² mM or equal to or at least 1.0 × 10³ mM.

It is further understood that the lower limit of the amount of the at least one compound (A), as detailed above, is equal to or less than 1.0 × 10⁵ mM, or equal to or less than 5.0 × 10⁴ mM, or equal to or less than 1.0 × 10⁴ mM, or equal to or less than 5.0 × 10³ mM, per litre of the concentrated composition (Cc).

In a preferred embodiment of the method of the present invention, the amount of the at least one compound (A), as detailed above, ranges from 1.0 × 10¹ mM to 1.0 × 10⁵ mM, or from 5.0 × 10¹ mM to 5.0 × 10⁴ mM, or from 1.0 × 10² mM to 1.0 × 10⁴ mM, or from 1.0 × 10³ mM to 5.0 × 10³ mM, per litre of concentrated composition (Cc).

Within the context of the invention, the expression "wherein said at least one compound (A) is present in an amount equal to at least 1.0 × 10¹ millimoles per litre of the concentrated composition (Cc) [mM, herein after]" refers either to the amount of compound (A), as detailed above when the concentrated composition (Cc) contains only one compound (A), or to the sum of the amounts of compounds (A) when the concentrated composition (Cc) contains more than one compound (A). This implies that when more than one compound (A) is present, then it is the sum of the amounts of each of said compound (A) that is present in an amount equal to or at least 1.0 × 10¹ millimoles per litre of concentrated composition (Cc).

In general, the concentrated composition (Cc) will be diluted in a solvent, thereby obtaining a diluted composition [diluted composition (C_{D}), herein after]. Desirably, the solvent used for diluting the concentrated composition (Cc) is water.

Either of the concentrated composition (Cc) or the diluted composition (C_{D}) can be supplied to the at least part of a plant or seed according to the present invention.

As to the dilution factor of the concentrated composition (Cc) which is to be applied in order to obtain the diluted composition (C_{D}) according to the method of the present invention, it is understood that the skilled person in the art will practise said dilution in order to comply with the suitable amount of compound (A), which is supplied per gram of fresh weight of plant or seed, as detailed above.

Within the context of the present invention, the dilution factor refers to the ratio of the volume of the initial solution (i.e. the concentrated composition (Cc)) to the volume of the final solution (i.e. the diluted composition (C_{D})).

Generally, the lower limit of the dilution factor of the concentrated composition (Cc) applied in order to obtain the diluted composition (C_{D}) will be determined, amongst others by the phytotoxicity of said composition (Cc) towards the plant or seed to which it is supplied.

The upper limit of the dilution factor of the concentrated composition (Cc) applied in order to obtain the diluted composition (C_{D}) will be adapted to avoid washing out of said composition (Cc) or diluted composition (C_{D}) when it is supplied.

According to some embodiments of the present invention, the dilution factor of the concentrated composition (Cc) applied in order to obtain the diluted composition (C_{D}) will be equal to at least 1 : 20 or equal to or at least 1 : 100, or equal to or at least 1 : 1000, or equal to or at least 1 : 5000.

By means of example, if the concentration of compound (A) is 100 millimoles per litre of concentrated composition (Cc) then in order to supply 1.0 µmol/gram fresh weight plant to a plant having a fresh weight of 10.0 grams, the skilled in the art may supply 100 µL of concentrated composition (Cc) to said plant. However, in order to ease application, the skilled in the art will generally dilute the concentrated composition (Cc) in order to supply the equivalent amount of compound (A) to said plant in a larger volume. For the purpose of achieving a concentration of compound (A) in the diluted composition (C_{D}) of 1 mM, concentrated composition (Cc) will be diluted 100 times, the dilution factor will be 1 : 100, and 10 mL of diluted composition (C_{D}) will be supplied to the plant.

Among the suitable manners for supplying the concentrated composition (Cc) or diluted composition (C_{D}), mention can notably be made of spraying (such as aerial spraying or ground spraying, atomizing, vaporizing, drenching, watering, squirting, sprinkling, pouring, fumigating, injecting, painting, seed treating, coating, immersing, soaking and the like by using conventional equipment such as a handpump, a backpack spayer, a boomsprayer, and the like. Desirably, the concentrated composition (Cc) or diluted composition (C_{D}) are supplied by spraying or by drenching.

According to certain embodiments of the method according to the present invention, either of the concentrated composition (Cc) or the diluted composition (C_{D}), as detailed above, may further comprises at least one surfactant.

Within the contest of the present invention, the expression "at least one surfactant" is intended to denote one or more than one surfactant. Mixtures of surfactants can also be used for the purpose of the invention. In the remainder of the text, the term "surfactant" is understood, for the purposes of the invention both in the plural and the singular form.

When present in the concentrated composition (Cc), the surfactant can desirably be used to stabilize the composition concentrated (Cc) so that the mixture maintains one single liquid phase. Additionally, when present in the diluted composition (C_{D}), the surfactant can improve the penetration of compound (A) in the part of plant or seed to which it is supplied, thereby reducing the onset of action as well as the application rate of compound (A).

Within the context of the present invention, the term "surfactant" is intended to refer to cationic, anionic, amphoteric or non-ionic surfactants.

Non-limiting examples of cationic surfactants include cetrimonium bromide, cetylpyridinium chloride, benzalkonium chloride, benzethonium chloride, dimethyldioctadecylammonium chloride and dioctadecylmethylammonium bromide.

Non-limiting examples of anionic surfactants include ammonium lauryl sulfate, sodium lauryl sulfate, sodium dodecyl sulfate, sodium laureth sulfate, sodium myreth sulfate, dioctyl sodium sulfosuccinate, perfluorooctanesulfonate, perfluorobutanesulfonate, alkyl-aryl ether phosphates and alkyl ether phosphates.

Non-limiting examples of amphoteric surfactants include alkyl betaine, alkyl dimethyl betaine, alkylamido betaine, alkyl amide betaine, alkylamidopropyl betaine, alkyl dimethylammonium betaine, alkyl amidopropyl betaine, alkyl sulfobetaine; alkyl, alkylampho glycinate, alkylamphocarboxy glycinate, alkyl or alkyl substituted imidazoline monocarboxylate, alkyl or alkyl substituted imidazoline dicarboxylate, sodium salts of alkyl monocarboxylates, sodium salts of alkyl monocarboxylates, alkyl beta amino acids, alkyl amidopropyl hydroxysultaine, alkyl ether hydroxysultaine, alkyl amidopropyl dimethyl ammonia acetate, alkyl ampho monoacetate, alkyl ampho diacetate, alkyl dipropionate, alkyl ampho dipropionate, alkyl imino dipropionate, alkyl amphopropionate, alkyl beta amino propionic acid, alkyl dipropionate, alkyl beta iminodipropionate, branched or n-alkyl dimethylamidopropionate, alkyl carboxylated propionate, alkyl imidazoline, methyl alkyl imidazoline, fluorinated alkyl amphoteric mixtures.

Non-limiting examples of non-ionic surfactants notably include polyethoxylated fatty acids; vegetable oils; fatty alcohols; alcohol alkoxylates; alkoxylated alkyl alcohols; polyoxyethylene alkyl alcohols; polyol esters of fatty acids; polyoxyethylene esters of fatty acids; fatty acid amides; polyoxyethylene fatty acid amides; polyalkylene oxide block copolymers; ethoxylated alkyl mercaptans and the like.

Preferred non-ionic surfactants may be chosen among octaethylene glycol monododecyl ether, pentaethylene glycol monododecyl ether, nonoxynols, polyoxyethylene octyl phenyl ether, polyethoxylated tallow amine, cocoamide monoethanolamine, cocoamide dietholamine, poloxamers, glycerol monostearate, glycerol monolaurate, sorbitan monolaurate, sorbitan monosetearate, sorbitan tristearate, polyethylene glycol (20) sorbitan monolaurate, (i.e. PEG(20)sorbitan monolaurate or Tween 20), polyethylene glycol (20) sorbitan monostearate, polyoxyethylene (20) sorbitan monooleate, polyoxyethylene (20) sorbitan monopalmitate, decyl glucoside, lauryl glucoside, octyl glucoside, lauryldimethylamine oxide, BrijTM, glycerol, glyceryl polyethylene glycol ricinoleate (PEG); wherein the number of ethylene oxide units varies from 2 to 200, polyglyceryl ester, polyglyceryl monooleate, decaglyceryl monocaprylate, propylene glycol dicaprilate, triglycerol monostearate, ethoxylated castor oil or mixtures thereof.

As to the amount of the surfactant it is understood that the skilled person in the art will practise said surfactant in a suitable amount according to the standard and general practice known by said skilled person in the art.

According to a particular embodiment of the present invention, the amount of the surfactant, as detailed above, relative to the total weight of the concentrated composition (Cc) is generally equal to at least 5.0 × 10⁻³ wt.%, or equal to or at least 1.0 × 10⁻² wt.%, or equal to or at least 5.0 × 10⁻² wt.%, or equal to or at least 1.0 × 10⁻¹ wt.%. It is further understood that, when present, the amount of the surfactant, as detailed above, relative to the total weight of the concentrated composition (Cc) is generally equal to or less than 80.0 wt.%, or equal to or less than 70.0 wt.%, or equal to or less than 60.0 wt.%, or equal to or less than 50.0 wt.%.

In a preferred embodiment of the method of the present invention, the amount of the surfactant, as detailed above, relative to the total weight of concentrated composition (Cc) ranges from 5.0 × 10⁻³ to 80 wt.%, or from 1.0 × 10⁻² wt.% to 70 wt.%, or from 5.0 × 10⁻² to 60 wt.%, or from 1.0 × 10⁻¹ to 50 wt.%.

According to a particular embodiment of the present invention, the amount of the surfactant, as detailed above, relative to the total weight of the diluted composition (C_{D}) is generally equal to at least 5.0 × 10⁻⁵ wt.%, or equal to or at least 1.0 × 10⁻⁴ wt.%, or equal to or at least 5.0 × 10⁻⁴ wt.%, or equal to or at least 1.0 × 10⁻³ wt.%. It is further understood that, when present, the amount of the surfactant, as detailed above, relative to the total weight of the diluted composition (C_{D}) is generally equal to or less than 20.0 wt.%, or equal to or less than 10.0 wt.%, or equal to or less than 5.0 wt.%, or equal to or less than 2.5 wt.%.

In a preferred embodiment of the method of the present invention, the amount of the surfactant, as detailed above, relative to the total weight of diluted composition (C_{D}) ranges from 5.0 × 10⁻⁵ to 20.0 wt.%, or from 1.0 × 10⁻⁴ wt.% to 10.0 wt.%, or from 5.0 × 10⁻⁴ to 5.0 wt.%, or from 1.0 × 10⁻³ to 2.5 wt.%.

According to certain embodiments of the present invention, either of the concentrated composition (Cc) or the diluted composition (C_{D}), as detailed above, further comprises at least one other additional ingredient [ingredient (I_{C}), herein after] to enhance the appearance, storage, transport, handling and/or performance of the composition (C).

Within the context of the present invention, the expression "at least ingredient of other additional ingredients [ingredient (Ic), herein after]" is intended to denote one or more than one ingredient (I_{C}). Mixtures of ingredients (I_{C}) can also be used for the purpose of the invention. In the remainder of the text, the expression "ingredient (I_{C}) is understood, for the purposes of the present invention, both in the plural and the singular form.

Said ingredients (I_{C}) are known to those skilled in the art of agricultural and pest control compositions. Non-limiting examples of ingredients (I_{C}) notably include: suspending agents and similar ingredients to enhance the shelf life of the product, colorants, fragrances, solvents, thinning agents and thickening agents, any material that facilitate the application of the composition (C) such as spreading or sticking agents, antifreezes, evaporation inhibitors, anti-caking agents, defoamers and any other materials customarily employed in formulating pest control compositions.

As to the amount of the additional ingredients (Ic), it is understood that the skilled person in the art will practise said additional ingredients (I_{C}) in a suitable amount according to standard and general practice known by said skilled person in the art.

According to some embodiments of the present invention, the weight ratio of the at least one compound (A) to the additional ingredient (I_{C}) is equal to at least 1 : 10, preferably equal to at least 1 : 5, more preferably equal to at least 1 : 2.

In a preferred embodiment of the method according to the present invention, either of the concentrated composition (Cc) or the diluted composition (C_{D}), comprises the at least one compound (A), as detailed above, water, optionally at least one surfactant, as detailed above, and optionally at least one additional ingredient (I_{C}).

According to a preferred embodiment of the present invention, the concentrated composition (Cc) comprises water and the at least one compound (A), as detailed above, the at least one surfactant, as detailed above and optionally at least one additional ingredient (Ic), as detailed above, and comprises:
- 1.0 × 10³ - 5.0 × 10³ mM of at least one compound (A₁) of general Formula (I_{A1-1}-a), as defined above;
- 1.0 × 10⁻¹ - 50.0 wt.% of at least one surfactant,
- optionally at least one additional ingredient (I_{C})
wherein the amount of compound (A₁) is relative to the total volume of the concentrated composition (Cc), whereas the amount of surfactant is relative to the total weight of the concentrated composition (Cc).

The concentrated composition (Cc) can be prepared by a variety of methods known in the art.

In one embodiment of the present invention, the method for manufacturing the concentrated composition (Cc), as detailed above, comprises intimate admixing of the at least one compound (A), water, optionally a surfactant, as defined above, and optionally the at least one additional ingredient (Ic), as defined above.

It is understood that the skilled person in the art will carry out said intimate admixing according to general practice such as notably using optimal time, speeds, weights, volumes and batch quantities.

In a further embodiment of the present invention, additional nutrients and/or plant protection products can also be added to either of the concentrated composition (Cc) or the diluted composition (C_{D}), as detailed above, thereby producing a formulation for growing plants [formulation (F), herein after)].

Another aspect of the present invention, is said formulation (F) which is suitable for growing plants, and comprises:
a) the diluted composition (C_{D}), as detailed above, whereby the solvent used for diluting is water,
   and either of or both of
b) one or more plant nutrients in a collective amount of at least 50 dry weight percent (dry wt. %), based on the dry weight of the formulation; and
c) one or more plant protection product comprising other plant defence inducers, herbicides, pesticides, insecticides, miticides, acaricides, nematicides, fungicides, bactericides, rodenticides, growthregulating agents or the like.

The concentrated composition (C_{C}) and the diluted composition (C_{D}) in the formulation includes any of the embodiments of the concentrated composition (Cc) and the diluted composition (C_{D}) described above.

The plant nutrients, may comprise primary nutrients, secondary nutrients and/or micronutrients. Examples of suitable primary nutrients include sources of potassium, phosphorus, nitrogen. Examples of suitable secondary nutrients include sources of calcium, magnesium, and sulphur. Examples of suitable micronutrients include sources of boron, cobalt, iron, manganese, molybdenum, zinc, chlorine and copper.

It is a further object of the present invention to provide a use of the compound (A) of Formula (I_{A1}-a), as detailed above, for growing plants.

Generally, all aspects of the present invention discussed herein in the context of a method for growing plants according to the invention apply mutatis mutandis to the use of the compound (A) of Formula (I_{A1}-a), as detailed above, for growing plants according to the invention, as defined above.

### EXAMPLES

The invention will now be described in more details with examples, whose purpose is merely illustrative and not intended to limit the scope of the invention.

### Preparation of the compositions

The characteristics of the compositions of comparative examples 1-5 (CEx 1 - 5) and examples 6 - 7 (Ex 6 - 7) are shown in Table 1.

**Table 1**

| | **Ingredients (concentration (mM) relative to the total volume of the composition)** | | |
|---|---|---|---|
| | **(*R*)-beta-aminobutyric acid** | **(*S*)-beta-aminobutyric acid** | ***Compound (A) of formula (I_{A1-1}-a), wherein R' is a methyl group*** |
| CEx 1 | 2.5 | - | - |
| CEx 2 | 5.0 | - | - |
| CEx 3 | - | 2.5 | - |
| CEx 4 | - | 5.0 | - |
| CEx 5 | 2.5 | 2.5 | - |
| Ex 6 | - | - | 2.5 |
| Ex 7 | - | - | 5.0 |

All ingredients were mixed in water with optional heating until a homogenous mixture was obtained. All compositions contained 0.02 wt.% Tween 20 (Corda International PLC) as surfactant.

### Example 1

The water-based compositions of Comparative Examples 1 - 4 and Examples 6 - 7, as listed in Table 1 were applied to tomato seedlings of the commercial variety Moneymaker transplanted 7 days earlier in pots containing 85 - 90 grams of soil. Each composition was applied by spraying uniformly over each plant resulting in the application of 6.5 mL of each composition per plant. In addition, control plants were sprayed with a composition consisting of water and 0.02 wt. % Tween 20. Each treatment was replicated 5 times.

No difference in plant height was observed between the different treatments before application of the compositions.

Eleven days after application of the compositions, an assessment of the root length of the tomato seedlings was carried out.

The results of this assessment are listed in Table 2.

**Table 2**

| **Treatment** | **Average root length 11 days after application (cm)** |
|---|---|
| Control | 19.6 |
| CEx 1 | 14.2 |
| CEx 2 | 12.8 |
| CEx 3 | 18.6 |
| CEx 4 | 16.6 |
| Ex 6 | 19.2 |
| Ex 7 | 21.8 |

The water-based compositions of Comparative Examples 1 - 4 resulted in a reduction of the root length of the tomato seedlings as compared to the control-treated seedlings. No reduction of the root length was observed for the seedlings treated with the compositions of Example 6 and even an increase in root length was observed for the tomato seedlings treated with the composition of Example 7.

### Example 2

The water-based compositions of Comparative Example 5 and Example 6, as listed in Table 1 were applied to tomato seedlings of the commercial variety Moneymaker transplanted 14 days earlier in pots containing 85-90 grams of soil. Each composition was applied by spraying uniformly over each plant resulting in the application of 6.5 mL of each composition per plant. In addition, control plants were sprayed with a composition consisting of water and 0.02 wt.% Tween 20. Each treatment was replicated 5 times.

Twenty-four hours after the treatments, the leaves of the tomato seedlings were detached and from the plants and infected with *Botrytis cinerea.* The infected leaves were subsequently incubated in a plastic tray covered with a plastic film to maintain humidity thereby allowing the development of the fungus *B*. *cinerea.*

Four days after infection of the leaves, an assessment of the susceptible lesions of *B*. *cinerea* on the detached leaves was carried out. Susceptible lesions are lesions which are considered as still active and developing.

The result of this assessment are listed in Table 3.

**Table 3**

| **Treatment** | **Susceptible lesions (%)** |
|---|---|
| Control | 54.3 |
| CEx 5 | 21.2 |
| Ex 6 | 17.5 |

Plant treated with the water-based compositions of Comparative Example 5 and Example 6 both showed a reduction of the susceptible lesions of *B*. *cinerea* as compared to the control plants. In addition to the fact that plants treated with the composition of Example 6 did not show a reduction in plant growth (Table 2, Example 1), the results in Table 3 show that the composition of Example 6, as used in the method of the present invention, is still active for inducing plant defense against the fungus *B*. *cinerea* and more efficiently than the composition of Comparative Example 5, which is a potent plant defense inducer known in the art and causing phytotoxicity and reduction of plant growth.

### Example 3

The water-based compositions of Comparative Example 5 and Example 6, as listed in Table 1 were applied to tomato seedlings of the commercial variety Moneymaker transplanted 7 days earlier in pots containing 85-90 grams of soil. Each composition was applied by soil drenching uniformly each plant resulting in the application of 6.5 mL of each formulation per plant. In addition, control plants were drenched with a composition consisting of water and 0.02 wt.% Tween 20. Each treatment was replicated 5 times.

Twenty-four hours after the treatments, each tomato seedling was inoculated 300 J2 larvae of *Meloidogyne javanica.*

Twenty-five days after inoculation of the larvae, an assessment of the number of galls and egg mass on the rooting system was carried out.

The results of this assessment are listed in Table 4.

**Table 4**

| **Treatment** | **Mean number of galls/plant** | **Mean number of egg mass/root system** |
|---|---|---|
| Control | 108.1 | 68 |
| CEx 5 | 81.6 | 41.4 |
| Ex 6 | 87.1 | 37.3 |

Plant treated with the water-based compositions of Comparative Example 5 and Example 6 both showed a similar reduction of the number of galls and egg mass on the rooting system as compared to the control plants. In addition to the fact that plants treated with the composition of Example 6 did not show a reduction in plant growth (Table 2, Example 1), the results in Table 4 show that the composition of Example 6, as used in the method of the present invention, is still active for inducing plant defense against the nematode *M. javanica* in an manner equivalent to the composition of Comparative Example 5, which is a potent plant defense inducer known in the art and causing phytotoxicity and reduction of plant growth.

## Claims

1. A method for growing plants, wherein said method comprises supplying to at least part of a plant or a seed at least one compound of Formula (I_{A1}-a) or a salt thereof [compound (A), herein after]: 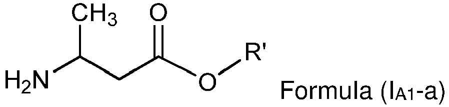 wherein
- R' is independently selected from C₁₋₄ alkyl.

2. The method according to claim 1, wherein R' is independently selected from methyl, ethyl, propyl, isopropyl.

3. The method according to claim 1 or claim 2, wherein R' is methyl.

4. The method according to any one of claims 1 to 3, wherein the at least one compound (A) corresponds to the following Formula (I_{A1-1}-a): 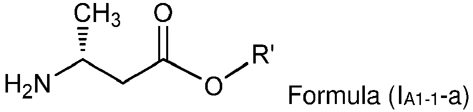 wherein R' is independently selected from C₁₋₄ alkyl, or, desirably, R' is independently selected from methyl, ethyl, propyl, isopropyl.

5. The method according to any one of claims 1 to 4, wherein the at least one compound (A) corresponds to the following Formula (I_{A1-1}-a1):

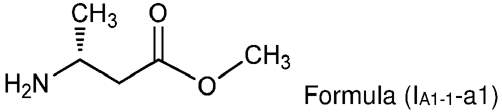

6. The method according to any one of claims 1 to 5, wherein the amount of the at least one compound (A) supplied to at least part of a plant or a seed is comprised between 1.0 × 10⁻³ and 100 µmol/gram of fresh weight of said at least part of a plant or seed.

7. The method according to any one of claims 1 to 6, wherein the at least one compound (A) is supplied to at least part of a plant or a seed selected from the group consisting of strawberry, tomato, potato, lettuce, grapes, soybean and cucurbits.

8. The method according to any one of claims 1 to 7, wherein the at least one compound (A) is supplied in the liquid form.

9. The method according to any one of claims 1 to 8, wherein the at least one compound (A) is comprised in a concentrated composition [concentrated composition (Cc), herein after] and wherein the amount of the at least one compound (A), per litre of concentrated composition (Cc), ranges from 1.0 × 10¹ mM to 1.0 × 10⁵ mM, or from 5.0 × 10¹ mM to 5.0 × 10⁴ mM, or from 1.0 × 10² mM to 1.0 × 10⁴ mM, or from 1.0 × 10³ mM to 5.0 × 10³ mM.

10. The method according to claim 9, wherein the concentrated composition (Cc) further comprises at least one surfactant.

11. The method according to claim 10, wherein the amount of surfactant, relative to the total weight of concentrated composition (Cc) ranges from 5.0 × 10⁻³ to 80 wt.%, or from 1.0 × 10⁻² to 70 wt.%, or from 5.0 × 10⁻² to 60 wt.%, or from 1.0 × 10⁻¹ to 50 wt.%.

12. The method according to any one of claims 9 to 11, wherein the concentrated composition (Cc) further comprises at least one additional ingredient [ingredient (Ic), herein below] selected from the group consisting of suspending agents, colorants, fragrances, solvents, thinning agents and thickening agents, spreading or sticking agents, antifreezes, evaporation inhibitors, anti-caking agents and defoamers.

13. The method according to any one of claims 9 to 12, wherein said method further comprises the step of diluting the concentrated composition (Cc) in a solvent, thereby obtaining a diluted composition [diluted composition (C_{D}), herein after].

14. The method according to claim 13, wherein the dilution factor of the concentrated composition (Cc) applied in order to obtain the diluted composition (C_{D}) is equal to at least 1 : 20, or equal to or at least 1 : 100, or equal to or at least 1 : 1000, or equal to or at least 1 : 5000.

15. A formulation for growing plants [Formulation (F), herein after] comprising:
a. the diluted composition (C_{D}) according to claim 13 or claim 14, whereby the solvent used for diluting is water,
and either of or both of
b. one or more plant nutrients in a collective amount of at least 50 dry weight percent (dry wt.%), based in the dry weight of the formulation; and
c. one or more plant protection product comprising other plant defence inducers, herbicides, pesticides, insecticides, miticides, acaricides, nematicides, fungicides, bactericides, rodenticides, and growthregulating agents.

16. Use of at least one compound of Formula (I_{A1}-a) or a salt thereof [compound (A), herein after] for growing plants, which compound (A) is supplied to at least part of a plant or a seed, and which compound (A) corresponds to the following formula: 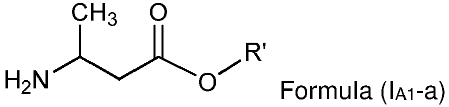 wherein
- R' is independently selected from C₁₋₄ alkyl.

## Patentansprüche

1. Ein Pflanzenzuchtverfahren, wobei das erwähnte Verfahren die Zuführung zu zumindest einem Teil einer Pflanze oder eines Samens von zumindest einer Verbindung der Formel (I_{A1}-a) oder eines Salzes davon [nachstehend Verbindung (A)] umfasst: 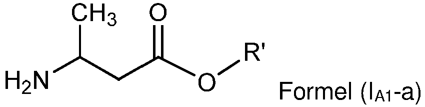 wobei
- R' unabhängig von C₁₋₄-Alkyl ausgewählt ist.

2. Das Verfahren nach Anspruch 1, wobei R' unabhängig von Methyl, Ethyl, Propyl, Isopropyl ausgewählt ist.

3. Das Verfahren nach Anspruch 1 oder Anspruch 2, wobei R' Methyl ist.

4. Das Verfahren nach irgendeinem der Ansprüche 1 bis 3, wobei die zumindest eine Verbindung (A) der folgenden Formel (I_{A1-1}-a) entspricht: 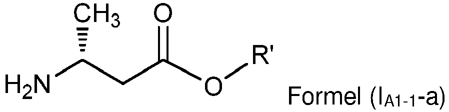 wobei R' unabhängig von C₁₋₄-Alkyl ausgewählt ist, oder R', wünschenswerterweise, unabhängig von Methyl, Ethyl, Propyl, Isopropyl ausgewählt ist.

5. Das Verfahren nach irgendeinem der Ansprüche 1 bis 4, wobei die zumindest eine Verbindung (A) der folgenden Formel (I_{A1-1}-a1) entspricht:

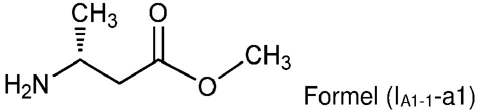

6. Das Verfahren nach irgendeinem der Ansprüche 1 bis 5, wobei die Menge der zumindest einen Verbindung (A), die zumindest einem Teil einer Pflanze oder eines Samens zugeführt wird, zwischen 1,0 × 10⁻³ und 100 µmol/Gramm des Frischgewichts des erwähnten zumindest Teils einer Pflanze oder eines Samens beträgt.

7. Das Verfahren nach irgendeinem der Ansprüche 1 bis 6, wobei die zumindest eine Verbindung (A) zumindest einem Teil einer Pflanze oder eines Samens zugeführt wird, ausgewählt aus der Gruppe bestehend aus Erdbeere, Tomate, Kartoffel, Kopfsalat, Trauben, Sojabohne und Kürbissen.

8. Das Verfahren nach irgendeinem der Ansprüche 1 bis 7, wobei die zumindest eine Verbindung (A) in der flüssigen Form zugeführt wird.

9. Das Verfahren nach irgendeinem der Ansprüche 1 bis 8, wobei die zumindest eine Verbindung (A) in einer konzentrierten Zusammensetzung enthalten ist [nachstehend konzentrierte Zusammensetzung (Cc)] und wobei die Menge der zumindest einen Verbindung (A), pro Liter konzentrierter Zusammensetzung (Cc), von 1,0 × 10¹ mM bis 1,0 × 10⁵ mM, oder von 5,0 × 10¹ mM bis 5,0 × 10⁴ mM, oder von 1,0 × 10² mM bis 1,0 × 10⁴ mM, oder von 1,0 × 10³ mM bis 5,0 × 10³ mM reicht.

10. Das Verfahren nach Anspruch 9, wobei die konzentrierte Zusammensetzung (Cc) ferner zumindest eine oberflächenaktive Substanz umfasst.

11. Das Verfahren nach Anspruch 10, wobei die Menge der oberflächenaktiven Substanz, in Bezug zum Gesamtgewicht der konzentrierten Zusammensetzung (Cc) von 5,0 × 10⁻³ bis 80 Gew.-%, oder von 1,0 × 10⁻² bis 70 Gew.-%, oder von 5,0 × 10⁻² bis 60 Gew.-%, oder von 1,0 × 10⁻¹ bis 50 Gew.-% reicht.

12. Das Verfahren nach irgendeinem der Ansprüche 9 bis 11, wobei die konzentrierte Zusammensetzung (Cc) ferner zumindest einen weiteren Bestandteil [nachstehend Bestandteil (I_{C})] umfasst, ausgewählt aus der Gruppe bestehend aus Suspendiermitteln, Farbstoffen, Duftstoffen, Lösungsmitteln, Verdünnungsmitteln und Verdickungsmitteln, Netz- oder Haftmitteln, Frostschutzmitteln, Verdampfungsinhibitoren, Trennmitteln und Entschäumungsmitteln.

13. Das Verfahren nach irgendeinem der Ansprüche 9 bis 12, wobei das erwähnte Verfahren ferner den Schritt des Verdünnens der konzentrierten Zusammensetzung (Cc) in einem Lösungsmittel umfasst, wodurch eine verdünnte Zusammensetzung [nachstehend verdünnte Zusammensetzung (C_{D})] erzielt wird.

14. Das Verfahren nach Anspruch 13, wobei der Verdünnungsfaktor der konzentrierten Zusammensetzung (Cc), der zur Anwendung kommt, um die verdünnte Zusammensetzung (C_{D}) zu erzielen, zumindest gleich 1 : 20, oder gleich oder zumindest 1 : 100, oder gleich oder zumindest 1 : 1.000, oder gleich oder zumindest 1 : 5.000 ist.

15. Eine Rezeptur zur Pflanzenzucht [nachstehend Rezeptur (F)], welche Folgendes umfasst:
a. die verdünnte Zusammensetzung (C_{D}) nach Anspruch 13 oder Anspruch 14, wobei das zum Verdünnen verwendete Lösungsmittel Wasser ist,
und eines oder beide der folgenden Elemente:
b. einen oder mehrere Pflanzennährstoffe in einer gemeinsamen Menge von mindestens 50 Trockengewichtsprozent (Trockengew.-%), basierend auf dem Trockengewicht der Rezeptur; und
c. ein oder mehrere Pflanzenschutzprodukte, darunter andere Induktoren der Pflanzenabwehr, Herbizide, Pestizide, Insektizide, Mitizide, Akarizide, Nematizide, Fungizide, Bakterizide, Rodentizide und Wachstumsregulatoren.

16. Verwendung von zumindest einer Verbindung der Formel (I_{A1}-a) oder eines Salzes davon [nachstehend Verbindung (A)] für die Pflanzenzucht, wobei Verbindung (A) zumindest einem Teil einer Pflanze oder eines Samens zugeführt wird, und wobei Verbindung (A) der folgenden Formel entspricht: 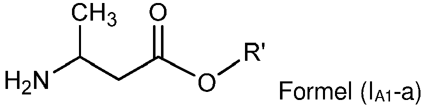 wobei
- R' unabhängig von C₁₋₄-Alkyl ausgewählt ist.

## Revendications

1. Procédé de culture de plantes, dans lequel ledit procédé comprend la fourniture à au moins une partie d'une plante ou d'une graine d'au moins un composé de formule (I_{A1}-a) ou un sel de celui-ci [composé (A), ci-après] : 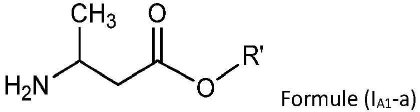 dans lequel
- R' est choisi indépendamment parmi le groupe alkyle en C₁₋₄.

2. Procédé selon la revendication 1, dans lequel R' est indépendamment choisi parmi méthyle, éthyle, propyle, isopropyle.

3. Procédé selon la revendication 1 ou la revendication 2, dans lequel R' représente un méthyle.

4. Procédé selon l'une quelconque des revendications 1 à 3, dans lequel ledit au moins un composé (A) correspond à la formule (I_{A1-1}-a) suivante : 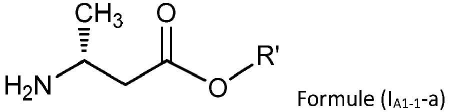 dans lequel R' est choisi indépendamment parmi le groupe alkyle en C₁₋₄, ou, de préférence, R' est choisi indépendamment parmi les groupes méthyle, éthyle, propyle, isopropyle.

5. Procédé selon l'une quelconque des revendications 1 à 4, dans lequel ledit au moins un composé (A) correspond à la formule (I_{A1-1}-a1) suivante :

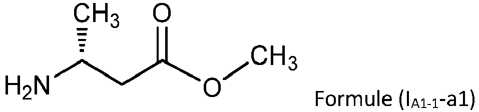

6. Procédé selon l'une quelconque des revendications 1 à 5, dans lequel la quantité dudit au moins un composé (A) fourni à au moins une partie d'une plante ou d'une graine est comprise entre 1,0 × 10⁻³ et 100 µmol/gramme de poids frais de ladite au moins une partie de plante ou de graine.

7. Procédé selon l'une quelconque des revendications 1 à 6, dans lequel ledit au moins un composé (A) est fourni à au moins une partie d'une plante ou d'une graine choisie dans le groupe constitué de la fraise, la tomate, la pomme de terre, la laitue, le raisin, le soja et les cucurbitacées.

8. Procédé selon l'une quelconque des revendications 1 à 7, dans lequel ledit au moins un composé (A) est fourni sous la forme liquide.

9. Procédé selon l'une quelconque des revendications 1 à 8, dans lequel ledit au moins un composé (A) est compris dans une composition concentrée [composition concentrée (C_{C}), ci-après] et dans lequel la quantité dudit au moins un composé (A), par litre de composition concentrée (C_{C}), est comprise entre 1.0 × 10¹ mM à 1,0 × 10⁵ mM, ou de 5,0 × 10¹ mM à 5,0 × 10⁴ mM, ou de 1,0 × 10² mM à 1,0 × 10⁴ mM, ou de 1,0 × 10³ mM à 5,0 × 10³ mM.

10. Procédé selon la revendication 9, dans lequel la composition concentrée (Cc) comprend en outre au moins un agent tensioactif.

11. Procédé selon la revendication 10, dans lequel la quantité de tensioactif, par rapport au poids total de la composition concentrée (Cc), est comprise entre 5,0 × 10⁻³ et 80 % en poids, ou entre 1,0 × 10⁻² et 70 % en poids, ou entre 5,0 × 10⁻² et 60 % en poids, ou entre 1,0 × 10⁻¹ et 50 % en poids.

12. Procédé selon l'une quelconque des revendications 9 à 11, dans lequel la composition concentrée (C_{C}) comprend en outre au moins un ingrédient supplémentaire [ingrédient (Ic), ci-après] choisi dans le groupe constitué par les agents de suspension, les colorants, les parfums, les solvants, les agents de dilution et les agents épaississants, les agents d'étalement ou d'adhésion, les antigels, les inhibiteurs d'évaporation, les agents anti-agglomérants et les antimousses.

13. Procédé selon l'une quelconque des revendications 9 à 12, dans lequel ledit procédé comprend en outre l'étape de dilution de la composition concentrée (Cc) dans un solvant, pour obtenir ainsi une composition diluée [composition diluée (C_{D}), ci-après].

14. Procédé selon la revendication 13, dans lequel le facteur de dilution de la composition concentrée (C_{C}) appliqué afin d'obtenir la composition diluée (C_{D}) est égal à au moins 1 : 20, ou égal ou au moins 1 : 100, ou égal ou au moins 1 : 1000, ou égal ou au moins 1 : 5000.

15. Formulation pour la culture de plantes [Formulation (F), ci-après] comprenant :
a. la composition diluée (C_{D}) selon la revendication 13 ou la revendication 14, où le solvant utilisé pour la dilution est l'eau,
et l'un ou l'autre ou les deux
b. un ou plusieurs éléments nutritifs pour les plantes en une quantité collective d'au moins 50 % en poids sec (% en poids sec), par rapport au poids sec de la formulation ; et
c. un ou plusieurs produits phytosanitaires comprenant d'autres inducteurs de défense des plantes, des herbicides, des pesticides, des insecticides, des acaricides, des nématicides, des fongicides, des bactéricides, des rodenticides et des agents régulateurs de croissance.

16. Utilisation d'au moins un composé de formule (I_{A1}-a) ou d'un sel de celui-ci [composé (A), ci-après] pour la croissance de plantes, lequel composé (A) est fourni à au moins une partie d'une plante ou d'une graine, et lequel composé (A) correspond à la formule suivante : 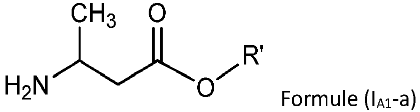 dans laquelle
- R' est choisi indépendamment parmi le groupe alkyle en C₁₋₄.
